# EUROPÄISCHE PATENTSCHRIFT

(11) **EP 3 483 810 B1**
(45) Veröffentlichungstag und Bekanntmachung des Hinweises auf die Patenterteilung: **30.09.2020**
(21) Anmeldenummer: 18201684.0
(22) Anmeldetag: 22.10.2018
(51) Int. Cl.: G06Q 10/08, G06Q 50/28

(54) **SYSTEM ZUR FACHBELEGUNGSÜBERWACHUNG**
SYSTEM FOR MONITORING COMPARTMENT OCCUPATION
SYSTÈME DE SURVEILLANCE DE L'OCCUPATION DE COMPARTIMENT

(30) Priorität: 13.11.2017 DE 102017126591
(43) Veröffentlichungstag der Anmeldung: 15.05.2019
(73) Patentinhaber: SICK AG, 79183 Waldkirch (DE)
(72) Erfinder: Bürger, Jürgen, 79331 Teningen (DE)

(56) Entgegenhaltungen:
- EP-A1- 2 476 635
- DE-A1- 19 828 659
- DE-B3-102016 108 582

## Beschreibung

Die vorliegende Erfindung betrifft ein System zur Fachbelegungsüberwachung in einem Regal nach dem Oberbegriff von Anspruch 1.

Im Zuge von Industrie 4.0 soll eine Befüllung von Regalsystemen weiter automatisiert werden. Ziel ist es, ein Nachfüllen der Regale direkt aus einer Leitebene heraus zu steuern und sicher zu stellen, dass Warenbehälter mit neuem Material an der richtigen Stelle nachgefüllt werden.

Die Regale werden im Schnitt alle fünf bis sieben Monate umgebaut. Beispielsweise kommt neues Material hinzu oder die Montage verändert sich. Dabei wird die Facheinteilung neu gestaltet. Die Montage und der Einrichteaufwand sollen beim Umbau möglichst klein sein.

Bekannt sind RFID-Leseeinheiten für Regalsysteme. RFID-Leseeinheiten können jedoch nur mit hohem Aufwand so gestaltet werden, dass sie nur ein Fach erfassen können. Als Randbedingung sind unterschiedliche Fachbreiten von ca. 200 mm bis ca. 600 mm gefordert.

Durch die große Anzahl von Regalsystemen wird eine kostengünstige Lösung gesucht. Weiter soll ein Verkabelungsaufwand am Regalsystem vermieden werden.

Die DE19828659A1 betrifft ein Lagersystem zur Aufbewahrung und Bereitstellung von Gegenständen in Behältnissen. Das Lagersystem weist eine Sensoreinrichtung auf zur zumindest näherungsweisen Bestimmung der Anzahl von in Behältnissen befindlichen Gegenständen, eine Anzeigeeinrichtung zur Signalisierung einer Entnahme-Reihenfolge, und eine Steuereinheit zur Beaufschlagung der Anzeigeeinrichtung in Abhängigkeit von Ausgangssignalen der Sensoreinrichtung.

Die_DE102016108582B3 offenbart eine Durchlauf-Regaleinheit zur Bereitstellung von Material in Logistik- und/oder Fertigungsprozessen mit mehreren, in Längsrichtung geneigten Regalfächern, wobei jedes Regalfach zur Aufnahme von mehreren, in Längsrichtung nebeneinander angeordneten Materialbehältern ausgebildet ist, wobei Regalfächer jeweils mehrere Sensoren zur Füllstandsüberwachung des jeweiligen Regalfaches aufweisen. Die Regalfächer umfassen jeweils wenigstens eine Fach-Kontrolleinheit zur Kontrolle der jeweiligen Sensoren des jeweiligen Regalfaches.

Die EP2476635A1 offenbart ein Lagerregal, das es ermöglicht, den verfügbaren Lagerraum effektiv und variabel zu nutzen mit mehreren beweglichen Regalen mit einem Regalrahmen, die zum Beladen mit Gegenständen vorgesehen sind.

Eine Aufgabe der Erfindung besteht darin, eine einfache und kostengünstige Erkennung von Warenbehältern und Regalfächern zu erkennen. Weiter soll ein Verdrahtungsaufwand reduziert werden bzw. vermieden werden. Weiter soll eine einfache Umbaumöglichkeit des Regales möglich sein. Weiter soll eine visuelle Überprüfung einer richtigen Einlagerung von Warenbehältern erfolgen.

Die Aufgabe wird gemäß Anspruch 1 gelöst durch ein System zur Fachbelegungsüberwachung in einem Regal mit mindestens einer Steuer- und Auswerteeinheit und mit mindestens einem Sensor mit einem Sensorgehäuse zur Fachbelegungsüberwachung in dem Regal, wobei das Sensorgehäuse eine Anzeigeeinrichtung aufweist, wobei in dem Sensorgehäuse ein erster Lichttaster angeordnet ist mit einer ersten Detektionsrichtung zur Erkennung von eingelegten Behältern in einem Regalfach wobei in dem Sensorgehäuse ein zweiter Lichttaster angeordnet ist mit einer zweiten Detektionsrichtung zur Erkennung eines Füllstands des Regales, wobei das Sensorgehäuse in einem Eingangsbereich des Regales montiert ist, der erste Lichttaster in den Eingangsbereich des Regalfaches und der zweite Lichttaster in das Regalfach zur Überprüfung des Füllstandes zeigt, die erste Detektionsrichtung und die zweite Detektionsrichtung unterschiedlich sind, wobei optischen Achsen der Detektionsrichtungen in einem spitzen Winkel zueinander angeordnet sind, wobei die Anzeigeeinrichtung an einem ersten Ende des Sensorgehäuses angeordnet ist, wobei an dem gegenüberliegenden zweiten Ende des Sensorgehäuses der erste Lichttaster angeordnet ist und an dem zweiten Ende des Sensorgehäuses der zweite Lichttaster angeordnet ist, wobei der zweite Lichttaster ein Distanzsensor auf Basis der Lichtlaufzeitmessung ist.

Gemäß der Erfindung kann sichergestellt werden, dass Behälter in vorgesehenen Regalfächern korrekt abgelegt werden und die richtige Ablage visuell für die Person angezeigt wird. Es ist ein Sensor bzw. ein Sensorgehäuse pro Regelfach vorgesehen. Dabei wird gleichzeitig der Füllstand des Regales überwacht, so dass eine Überfüllung vermieden wird, aber gleichzeitig auch ein Hinweis über die Anzeigeeinrichtung erfolgen kann, dass ein vorgegebener Füllstand unterschritten wird. Gemäß der Erfindung ist ein Sensor bzw. ein Sensorgehäuse pro Regalfach vorgesehen.

Die Anzeigeeinrichtung kann als LED-Anzeige mit einer oder mehreren Leuchtdioden ausgebildet sein, um zu signalisieren, welches Regalfach befüllt werden soll und/oder ob das Regalfach befüllt worden ist. Weiter kann auch angezeigt werden, ob ein falsches Regalfach befüllt worden ist. Weiter kann die Anzeigeeinrichtung auch ein Display aufweisen. Mit diesem Display können Zusatzinformationen angezeigt werden, beispielsweise den Inhalt des Regalfaches bzw. den Inhalt der Behälter für das Regalfach.

Das Sensorgehäuse ist beispielsweise an dem Regalfach festgeschraubt. Die Sensorgehäuse sind untereinander beispielsweise mittels Leitungen in einer Kette verbunden.

Gemäß der Erfindung erfolgt eine einfache und kostengünstige Erkennung von eingelegten Behältern oder Objekten an einem Regalfach. Weiter ist der Verdrahtungsaufwand gering, da die Sensoren lediglich mittels einer gemeinsamen Leitung miteinander verbunden sind. Weiter kann das Regal auch einfach umgebaut werden, da lediglich die Sensoren nach einem Umbau wieder den Regalfächern zugeordnet werden bzw. für neue Regalfächer neue Sensoren im System ergänzt werden müssen.

In Weiterbildung der Erfindung sind Achsen bzw. die optischen Achsen der Detektionsrichtungen beispielsweise in einer Ebene angeordnet, wobei die Ebene insbesondere senkrecht ist.

Gemäß der Erfindung ist die Anzeigeeinrichtung an einem ersten Ende des Sensorgehäuses angeordnet, wobei an dem gegenüberliegenden zweiten Ende des Sensorgehäuses der erste Lichttaster angeordnet ist und an dem zweiten Ende des Sensorgehäuses der zweite Lichttaster angeordnet ist.

Dadurch kann die Anzeigeeinrichtung in die Richtung zeigen von der aus das Regalfach befüllt wird und zum anderen zeigt der erste Lichttaster in den Eingangsbereich des Regalfachs und der zweite Lichttaster in das Regalfach zur Überprüfung des Füllstandes. Dadurch ist das Sensorgehäuse so ausgebildet, dass durch die Montage des Sensorgehäuses an dem Eingangsbereich des Regalfaches die Sensoren und die Anzeigeeinrichtung bereits ausgerichtet sind.

Gemäß einer bevorzugten Ausführungsform der Erfindung ist der erste Lichttaster ein Reflexionslichttaster, insbesondere ein Reflexionslichttaster mit Hintergrundausblendung.

Neben den rein energetisch arbeitenden Reflexionslichttastern haben ReflexionsLichttaster mit Hintergrundausblendung Vorteile, da sie in der Lage sind, dunkle Objekte vor hellem Hintergrund zu erkennen.

Weiter können Abstandssensoren bzw. Distanzsensoren zur Entfernungsbestimmung vorgesehen sein. Diese arbeiten beispielsweise nach dem Prinzip der Triangulation und enthalten eine positionsempfindliche Photodiode (PSD) statt des Phototransistors oder arbeiten beispielsweise nach dem Prinzip der Lichtlaufzeitmessung.

Eine Reflexions-Lichtschranke mit Hintergrundausblendung besteht aus einem Lichtsender und mehreren Lichtempfängern. Durch das Prinzip der Triangulation lässt sich der Abstand eines Behälters oder Objektes bestimmen. Abhängig von diesem Abstand schaltet der Näherungsschalter ein oder aus.

Bei diesen optischen Näherungsschaltern wird der vom Sender ausgesandte Lichtstrahl am Behälter oder am Objekt reflektiert. Bei rein energetisch arbeitenden Lichtschranken ohne Hintergrundausblendung wird auf einem Empfangselement die Energie des reflektierten Lichtes ausgewertet. Bei Lichtschranken mit Hintergrundausblendung wird nicht die Energie, sondern die Energiedifferenz auf mindestens zwei Lichtempfängern für die Auswertung herangezogen. So wird ein Signal ausgelöst, wenn auf einem Empfänger für den Vordergrund mehr Energie detektiert wird als auf einem Empfänger für den Hintergrund.

Neben einem fest eingestellten Bereich für Vordergrund und Hintergrund sind auch Lichttaster mit einstellbaren Bereichen vorgesehen. Dies kann beispielsweise elektronisch erfolgen.

In Weiterbildung der Erfindung ist der erste Lichttaster ein Distanzsensor. Dadurch kann bei der Befüllung des Regalfaches bereits mindestens eine Distanzmessung vorgenommen werden, um mindestens einen Entfernungswert des Objektes bzw. der Beladung zu erhalten. Es können auch mehrere Entfernungswerte erfasst werden, um eine einfache Konturbestimmung durchzuführen.

Gemäß der Erfindung ist der zweite Lichttaster ein Distanzsensor, nämlich ein Distanzsensor auf Basis der Lichtlaufzeitmessung. Durch die Erfassung der Entfernung des zweiten Sensors kann der Füllstand des Regales sehr genau erfasst werden. Durch die Verwendung eines Lichtlaufzeitsensors können auch sehr große Regaltiefen erfasst werden bei einer hohen Auflösung des Sensors, wodurch beispielsweise sehr viele kleine Behälter in einem Regalfach unterscheidbar sind.

Das Lichtsignal wird bei diesen über das zu detektierende Objekt selbst zurückgeworfen. Der Schaltabstand ist deshalb von den Reflexionseigenschaften der Objektoberfläche abhängig. Sender und Empfänger befinden sich auch hier parallel zueinander in einem gemeinsamen Gehäuse.

In Weiterbildung der Erfindung ist eine Vielzahl von Sensorgehäusen an einem Regal angeordnet, wobei jeweils mindestens ein Sensorgehäuse pro Regalfach angeordnet ist, wobei die Sensorgehäuse durch ein Bussystem miteinander verbunden sind.

Bei der Verbindung zwischen den Sensoren kann das Bussystem insbesondere ein Feldbussystem sein. Bei einem Umbau können einfach weitere Sensoren in die Kette eingebracht oder herausgenommen werden. Eine Adressvergabe der Sensoren erfolgt automatisch nach jedem Neustart.

In Weiterbildung der Erfindung ist die elektrische Busverbindung zwischen den Sensorgehäusen durch ein Kabel oder durch die Kontaktschiene gebildet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System zur Fachbelegungsüberwachung in einem Regal in einer schematischen Seitenansicht;
- Figur 2: ein System zur Fachbelegungsüberwachung in einem Regal in einer schematischen Frontansicht;
- Figur 3 bis Figur 4: jeweils einen Sensor mit einem Sensorgehäuse;
- Figur 5: einen Sensor mit einem Sensorgehäuse und einer Antenne.

In den nachfolgenden Figuren sind identische Teile mit identischen Bezugszeichen versehen.

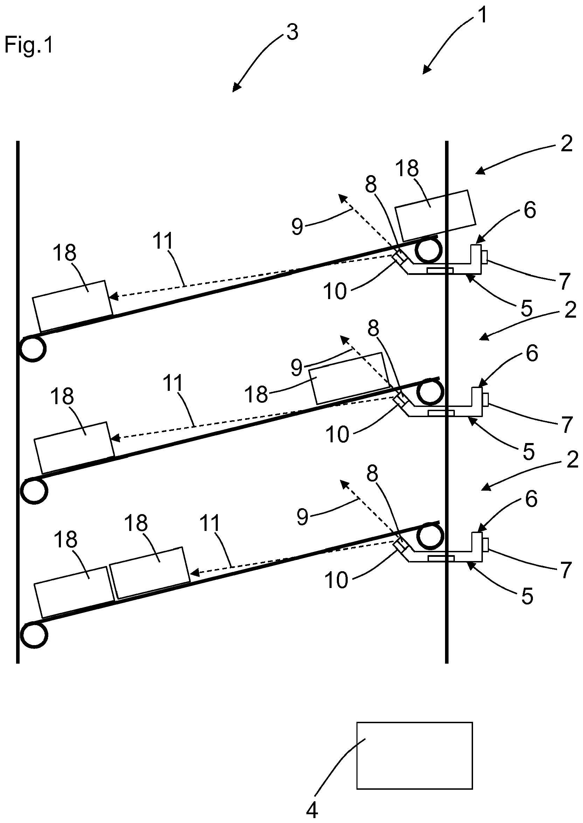

Figur 1 zeigt schematisch ein System 1 zur Fachbelegungsüberwachung in einem Regal 3 mit mindestens einer Steuer- und Auswerteeinheit 4 und mit mindestens einem Sensor 5 mit einem Sensorgehäuse 6 zur Fachbelegungsüberwachung in dem Regal 3, wobei das Sensorgehäuse 6 eine Anzeigeeinrichtung 7 aufweist, wobei in dem Sensorgehäuse 6 ein erster Lichttaster 8 angeordnet ist mit einer ersten Detektionsrichtung 9 zur Erkennung von eingelegten Behältern 18 in einem Regalfach 2, wobei in dem Sensorgehäuse 6 ein zweiter Lichttaster 10 angeordnet ist mit einer zweiten Detektionsrichtung 11 zur Erkennung eines Füllstandes des Regales 3, wobei die erste Detektionsrichtung 9 und die zweite Detektionsrichtung 11 unterschiedlich sind.

Gemäß Figur 1 ist ein Sensor 5 bzw. ein Sensorgehäuse 6 pro Regalfach 2 vorgesehen. In Figur 1 ist das Regal 3 in einer Seitenansicht dargestellt.

Gemäß Figur 1 kann die Anzeigeeinrichtung 7 in die Richtung zeigen von der aus das Regalfach 2 befüllt wird und zum anderen zeigt der erste Lichttaster 10 in den Eingangsbereich des Regalfachs 2 und der zweite Lichttaster 10 in das Regalfach 2 zur Überprüfung des Füllstandes. Dadurch ist das Sensorgehäuse 6 so ausgebildet, dass durch die Montage des Sensorgehäuses 6 an dem Eingangsbereich des Regalfaches 2 die Sensoren 5 und die Anzeigeeinrichtung 7 bereits ausgerichtet sind.

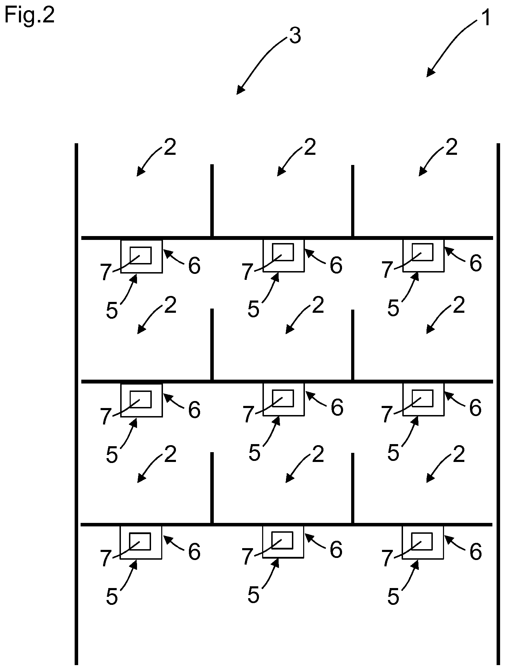

Gemäß Figur 2 ist das Regal 3 aus Figur 1 schematisch in einer Frontansicht dargestellt. Die Anzeigeeinrichtung 7 kann als LED-Anzeige mit einer oder mehreren Leuchtdioden ausgebildet sein, um zu signalisieren, welches Regalfach 2 befüllt werden soll und/oder ob das Regalfach 2 befüllt worden ist. Weiter kann auch angezeigt werden, ob ein falsches Regalfach 2 befüllt worden ist. Weiter kann die Anzeigeeinrichtung 7 auch ein Display aufweisen. Mit diesem Display können Zusatzinformationen angezeigt werden, beispielsweise den Inhalt des Regalfaches 2 bzw. den Inhalt der Behälter für das Regalfach 2.

Das Sensorgehäuse 6 ist beispielsweise an dem Regalfach 2 festgeschraubt. Die Sensorgehäuse 6 sind untereinander beispielsweise mittels Leitungen in einer Kette verbunden. Bei der Verbindung zwischen den Sensoren 5 kann ein Bussystem, insbesondere ein Feldbussystem vorgesehen sein.

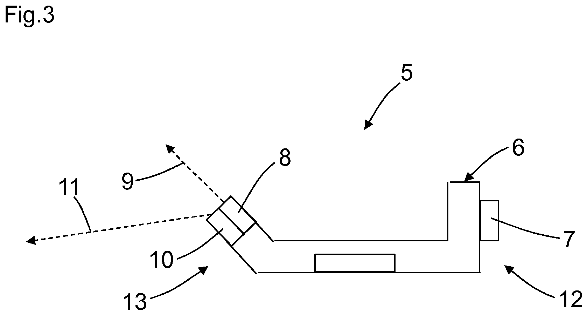

Gemäß Figur 3 ist der Sensor 5 aus Figur 1 vergrößert dargestellt. Die Anzeigeeinrichtung 7 ist an einem ersten Ende 12 des Sensorgehäuses 6 angeordnet, wobei an dem gegenüberliegenden zweiten Ende 13 des Sensorgehäuses 6 der erste Lichttaster 8 angeordnet ist und an dem zweiten Ende des Sensorgehäuses 6 der zweite Lichttaster 10 angeordnet ist.

Gemäß Figur 3 ist der erste Lichttaster 8 ein Reflexionslichttaster, insbesondere ein Reflexionslichttaster mit Hintergrundausblendung.

Eine Reflexions-Lichtschranke mit Hintergrundausblendung besteht aus einem Lichtsender und mehreren Lichtempfängern. Durch das Prinzip der Triangulation lässt sich der Abstand eines Behälters 18 oder Objektes bestimmen. Abhängig von diesem Abstand schaltet der Näherungsschalter ein oder aus.

Neben einem fest eingestellten Bereich für Vordergrund und Hintergrund sind auch Lichttaster mit einstellbaren Bereichen vorgesehen. Dies kann beispielsweise elektronisch erfolgen.

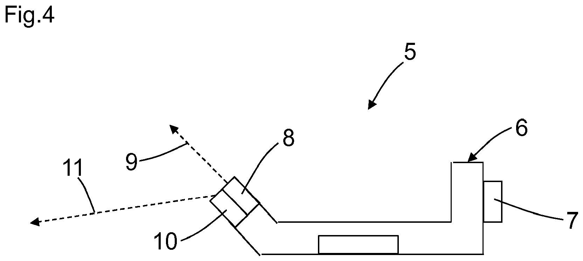

Gemäß Figur 4 ist der erste Lichttaster 8 als Abstandssensor zur Entfernungsbestimmung vorgesehen. Diese arbeiten dann nach dem Prinzip der Triangulation und enthalten eine positionsempfindliche Photodiode (PSD) statt des Phototransistors. Es können auch Abstandssensoren vorgesehen sein, die nach dem Prinzip der Lichtlaufzeit arbeiten.

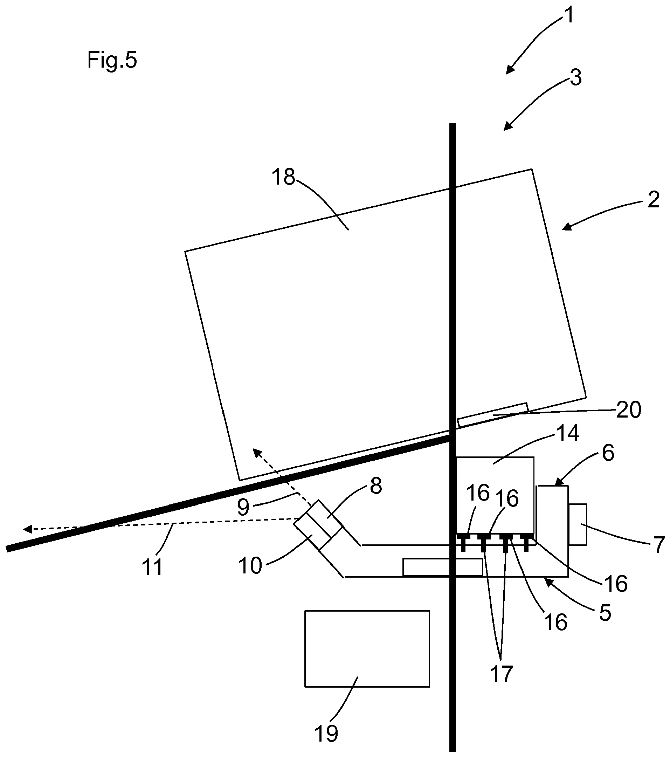

Gemäß Figur 5 ist der erste Lichttaster 8 ein Distanzsensor. Dadurch kann bei der Befüllung des Regalfaches 2 bereits mindestens eine Distanzmessung vorgenommen werden, um mindestens einen Entfernungswert des Objektes bzw. der Beladung zu erhalten. Es können auch mehrere Entfernungswerte erfasst werden, um eine einfache Konturbestimmung durchzuführen.

Gemäß Figur 5 ist der zweite Lichttaster 10 ein Distanzsensor, insbesondere ein Distanzsensor auf Basis der Lichtlaufzeitmessung.

Gemäß Figur 5 ist mindestens eine Antenne 14 vorgesehen, wobei das Sensorgehäuse 6 an der Antenne 14 befestigt ist, wobei die Steuer- und Auswerteeinheit dazu ausgebildet ist, Veränderungen in der Fachbelegung aus einer Kombination von Informationen einer mit der Antenne 14 verbundenen RFID-Lesevorrichtung 19 und Informationen des Sensors 5 zu erkennen und örtlich zuzuordnen.

Die RFID-Lesevorrichtung 19 weist einen an die Antenne 14 angeschlossenen RF-Transceiver auf und gegebenenfalls eine gesonderte Steuer- und Auswerteeinheit, welche dazu ausgebildet ist über den RF-Transceiver und die Antenne mittels RFID-Signalen mit einem RFID-Transponder 20 zu kommunizieren.

Je mindestens ein RFID-Transponder 20 ist je einem Warenbehälter 18 zugeordnet und an dem Warenbehälter 18 angebracht bzw. befestigt. Auf dem RFID-Transponder 20 sind alle wesentlichen Merkmale der Befüllung abgespeichert.

Die Antenne 14 ist bevorzugt eine über die Regalbreite oder Regalhöhe langgestreckte Antenne 14, beispielsweise eine Stabantenne. Die Antenne 14 kann auch aus mehreren in Reihe geschalteter Antennen 14 zusammengesetzt sein.

Wenn das Regal 3 gemäß Figur 5 befüllt wird, liest die RFID-Lesevorrichtung 19 mit Hilfe der Antenne 14 den RFID-Code auf dem Behälter 18. Das richtige Regalfach 2 zur Befüllung wird mittels der Anzeigeeinrichtung 7 des Sensors 5 angezeigt. Der erste Lichttaster 8 detektiert das richtige Ablegen des Warenbehälters 18. Der zweite Lichttaster 10 dient zur Erkennung des Füllstandes des Regalfaches 2.

Es könnten auch mehrere Antennen 14 jeweils parallel zu einer Regalfrontfläche angeordnet sein.

Die Antenne 14 kann auch als Regalelement genutzt werden. Je nach Ausführungsform ist die Antenne 14 selbst Teil des Regals 3, dient zu dessen Stabilisierung oder ist zumindest so in das Regal 3 eingebaut, dass es anders als eine herkömmliche Verkabelung keine Abläufe stört. Die Antenne 14 kann waagerecht oder senkrecht montiert sein, um gezielt entsprechend zueinander angeordnete Regalabschnitte oder Behälter 18 zu erfassen.

Gemäß Figur 5 sind an der Antenne 14 Kontaktschienen 16 zur Kontaktierung von Kontaktmitteln 17 des Sensors bzw. Sensorgehäuses 6 vorgesehen.

### Bezugszeichen:

- 1: System
- 2: Regalfach
- 3: Regal
- 4: Steuer- und Auswerteeinheit
- 5: Sensor
- 6: Sensorgehäuse
- 7: Anzeigeeinrichtung
- 8: erster Lichttaster
- 9: erste Detektionsrichtung
- 10: zweiter Lichttaster
- 11: zweite Detektionsrichtung
- 12: erstes Ende des Sensorgehäuses
- 13: zweites Ende des Sensorgehäuses
- 14: Antenne
- 16: Kontaktschienen
- 17: Kontaktmittel
- 18: Behälter
- 19: RFID-Lesevorrichtung
- 20: RFID-Transponder

## Patentansprüche

1. System (1) zur Fachbelegungsüberwachung in einem Regal (3) mit mindestens einer Steuer- und Auswerteeinheit (4) und mit mindestens einem Sensor (5) mit einem Sensorgehäuse (6) zur Fachbelegungsüberwachung in dem Regal (3), wobei das Sensorgehäuse (6) eine Anzeigeeinrichtung (7) aufweist, wobei in dem Sensorgehäuse (6) ein erster Lichttaster (8) angeordnet ist mit einer ersten Detektionsrichtung (9) zur Erkennung von eingelegten Behältern (18) in einem Regalfach (2),
wobei
in dem Sensorgehäuse (6) ein zweiter Lichttaster (10) angeordnet ist mit einer zweiten Detektionsrichtung (11) zur Erkennung eines Füllstands des Regales (3), wobei das Sensorgehäuse in einem Eingangsbereich des Regales montiert ist, der erste Lichttaster in den Eingangsbereich des Regalfaches und der zweite Lichttaster in das Regalfach zur Überprüfung des Füllstandes zeigt, die erste Detektionsrichtung und die zweite Detektionsrichtung unterschiedlich sind, wobei die optischen Achsen der Detektionsrichtungen in einem spitzen Winkel zueinander angeordnet sind, wobei die Anzeigeeinrichtung (7) an einem ersten Ende des Sensorgehäuses (12) angeordnet ist, wobei an dem gegenüberliegenden zweiten Ende (13) des Sensorgehäuses (6) der erste Lichttaster (8) angeordnet ist und an dem zweiten Ende (13) des Sensorgehäuses (6) der zweite Lichttaster (10) angeordnet ist, wobei der zweite Lichttaster (10) ein Distanzsensor auf Basis der Lichtlaufzeitmessung ist.

2. System nach Anspruch 1, wobei die optischen Achsen der Detektionsrichtungen sich in einer Ebene befinden.

3. System nach Anspruch 2, wobei die Ebene senkrecht ist.

4. System nach mindestens einem der vorhergehenden Ansprüche, wobei der erste Lichttaster (8) ein Reflexionslichttaster ist, insbesondere ein Reflexionslichttaster mit Hintergrundausblendung.

5. System nach mindestens einem der vorhergehenden Ansprüche, wobei der erste Lichttaster (8) ein Distanzsensor ist.

6. System nach mindestens einem der vorhergenannten Ansprüche, wobei eine Vielzahl von Sensorgehäusen an einem Regal angeordnet sind, wobei jeweils mindestens ein Sensorgehäuse pro Regalfach angeordnet ist, wobei die Sensorgehäuse durch ein Bussystem miteinander verbunden sind.

7. System nach mindestens einem der vorhergenannten Ansprüche, wobei die elektrische Busverbindung zwischen den Sensorgehäusen durch ein Kabel oder durch die Kontaktschiene gebildet ist.

## Claims

1. A system (1) of monitoring bay occupancy in a shelf (3) having at least one control and evaluation unit (4) and having at least one sensor (5) comprising a sensor housing (6) for monitoring bay occupancy in the shelf (3), wherein the sensor housing (6) has a display device (7), and wherein a first light sensor (8) having a first detection direction (9) for detecting containers (18) placed in a shelf bay (2) is arranged in the sensor housing (6),
wherein
a second light sensor (10) having a second detection device (11) for detecting a filling status of the shelf (3) is arranged in the sensor housing (6); and
wherein the sensor housing is installed in an entrance area of the shelf, the first light sensor faces into the entrance area of the shelf bay and the second light sensor faces into the shelf bay for checking the filling status, the first detection direction and the second detection direction are different, wherein the optical axes of the detection directions are arranged at an acute angle toward one another, wherein the display device (7) is arranged at a first end of the sensor housing (12), wherein the first light sensor (8) is arranged at the oppositely disposed second end (13) of the sensor housing (6) and the second light sensor (10) is arranged at the second end (13) of the sensor housing (6) and wherein the second light sensor (10) is a distance sensor on the basis of a time of flight measurement.

2. A system in accordance with claim 1, wherein the optical axes of the detection directions are located in one plane.

3. A system in accordance with claim 2, wherein the plane is perpendicular.

4. A system in accordance with at least one of the preceding claims, wherein the first light sensor (8) is a reflected light sensor, in particular a reflected light sensor having background masking.

5. A system in accordance with at least one of the preceding claims, wherein the light sensor (8) is a distance sensor.

6. A system in accordance with at least one of the preceding claims, wherein a plurality of sensor housings are arranged at a shelf, with at least one respective sensor housing being arranged per shelf bay and with the sensor housings being connected to one another by a bus system.

7. A system in accordance with at least one of the preceding claims, wherein the electric bus connection between the sensor housings is formed by a cable or by a contact rail.

## Revendications

1. Système (1) pour surveiller l'occupation des compartiments dans un rayonnage (3), comprenant au moins une unité de commande et d'évaluation (4) et au moins un capteur (5) pourvu d'un boîtier de capteur (6) pour surveiller l'occupation des compartiments dans le rayonnage (3),
dans lequel le boîtier de capteur (6) comprend un moyen d'affichage (7), un premier détecteur photoélectrique (8) est disposé dans le boîtier de capteur (6) avec une première direction de détection (9) pour reconnaître des récipients (18) posés dans un compartiment (2) du rayonnage, un deuxième détecteur photoélectrique (10) est disposé dans le boîtier de capteur (6) avec une deuxième direction de détection (11) pour reconnaître un niveau de remplissage du rayonnage (3),
le boîtier de capteur est monté dans une zone d'entrée du rayonnage,
le premier détecteur photoélectrique est dirigé vers la zone d'entrée du compartiment du rayonnage, et le deuxième détecteur photoélectrique est dirigé vers le compartiment du rayonnage pour surveiller le niveau de remplissage, la première direction de détection et la deuxième direction de détection étant différentes, les axes optiques des directions de détection sont disposés sous un angle aigu l'un par rapport à l'autre, le moyen d'affichage (7) est disposé à une première extrémité du boîtier de capteur (12), le premier détecteur photoélectrique (8) est disposé à la deuxième extrémité opposée (13) du boîtier de capteur (6), et le deuxième détecteur photoélectrique (10) est disposé à la deuxième extrémité (13) du boîtier de capteur (6), le deuxième détecteur photoélectrique (10) est un capteur de distance basé sur la mesure du temps de parcours de lumière.

2. Système selon la revendication 1, dans lequel les axes optiques des directions de détection se situent dans un plan.

3. Système selon la revendication 2, dans lequel le plan est vertical.

4. Système selon l'une au moins des revendications précédentes, dans lequel le premier détecteur photoélectrique (8) est un détecteur photoélectrique à réflexion, en particulier un détecteur photoélectrique à réflexion avec suppression de l'arrière-plan.

5. Système selon l'une au moins des revendications précédentes, dans lequel le premier détecteur photoélectrique (8) est un capteur de distance.

6. Système selon l'une au moins des revendications précédentes, dans lequel une multitude de boîtiers de capteur sont disposés au niveau d'un rayonnage, au moins un boîtier de capteur respectif étant disposé par compartiment du rayonnage, les boîtiers de capteur étant reliés entre eux par un système de bus.

7. Système selon l'une au moins des revendications précédentes, dans lequel la connexion électrique par bus entre les boîtiers de capteur est formée par un câble ou par le rail de contact.
